# EUROPEAN PATENT APPLICATION

(11) **EP 0 966 885 A2**
(43) Date of publication of application: **29.12.1999**
(21) Application number: 99303317.4
(22) Date of filing: 28.04.1999
(51) Int. Cl.: A23G 1/00

(54) **Chocolate coating**

(30) Priority: 25.06.1998 US 104773
(71) Applicant: SOCIETE DES PRODUITS NESTLE S.A., 1800 Vevey (CH)
(72) Inventor: Destephen, Stephen J., Columbus, Ohio 43235 (US); Vaghela, Madansinh N., Marysville, Ohio 43040 (US)
(74) Representative: Hall, Marina

(57) **Abstract**

Chocolate or a compound coating comprising up to 2% by weight of alkaline earth phosphate based on the total weight of the product, and a process for the preparation thereof.

## Description

The present invention relates to chocolate or a compound coating, more particularly to chocolate or a compound coating containing a texturing agent and to a process for preparing such a coating.

In this invention the expression "compound coating" means a vegetable fat based coating. Compound coatings are well known to those skilled in the art (see Chocolate, Cocoa and Confectionery; Third Edition, 1989, Bernard W.Minifie; AVI, PP. 165-182). They are traditionally produced by pressing hot chocolate liquor (produced by roasting cocoa beans, cooling, winnowing to form the nibs and grinding the nibs to form the liquor containing from about 50 to 60% cocoa butter) using hydraulic pressure at 350-450 bars to extract the cocoa butter and form a cocoa press cake, pulverising the cocoa press cake to cocoa powder and adding a compound coating fat or confectionery fat to form the cocoa liquor substitute (also known as compound liquor) which is used as the compound coating. Compound coating fats or confectionery fats are, for example, cocoa butter alternatives which include vegetable fats such as cocoa butter equivalents (CBE), cocoa butter replacers (CBR) or cocoa butter substitutes (CBS) which are well known to those skilled in the art, e.g. CBS laurics and CBS nonlaurics (see Chocolate, Cocoa and Confectionery; Third Edition, 1989, Bernard W.Minifie, AVI, pp. 100-109).

At the present time, the creamy texture is not as evident in traditional mechanical mix chocolates as in expensive traditional crumb processed chocolate or compound coatings.

GB-A-2266217 (Fuji Corporation) describes the addition of a minimum of about 2.6% by weight of tricalcium phosphate to chocolate to produce a nutritionally low calorie chocolate. There is no mention of textural advantages.

We have found, surprisingly, that by adding less then half the amount of tricalcium phosphate as that used in the process described in GB-A-2266217, a creamy texture is promoted in milk chocolate, dark chocolate, white chocolate and compound coating with or without milk solids.

Accordingly, the present invention provides chocolate or a compound coating comprising up to 2% by weight of an alkaline earth phosphate based on the total weight of the product.

The alkaline earth may be any edible alkaline earth, e.g. calcium or magnesium.

The amount of alkaline earth phosphate is preferably from 0.1 to 0.5% and more preferably from 0.2 to 0.35% by weight based on the total weight of the product.

The chocolate may be plain, milk or white chocolate, or a compound coating preferably containing milk solids. Although the amount of butterfat present may be similar to that in conventional chocolate, an additional advantage of the chocolate or compound coating according to the present invention is that it may contain a reduced amount of butterfat compared with a conventional chocolate and still exhibit a creamy texture similar to conventional chocolate or compound coating. In addition, since butterfat softens and lowers the melting point of chocolate and compound coatings, there is the advantage that reduced amounts or the absence of butterfat have a reduced or no adverse effect on the melting point of the finished chocolate or compound coating. The chocolate may advantageously contain, for example, less than 2% and preferably less than 1.5% by weight of butterfat, or it may contain no butterfat at all. Similarly, a compound coating according to the present invention may exhibit a creamy texture similar to conventional chocolate or compound coating even if it contains a reduced amount of dairy component other than butterfat or if it contains no other dairy component at all.

The present invention also provides a process for the preparation of chocolate or a compound coating containing up to 2% by weight of an alkaline earth phosphate based on the total weight of the product which comprises adding the appropriate amount of the alkaline earth phosphate to the ingredients of the chocolate or compound coating.

The amount of the alkaline earth phosphate added to the ingredients is preferably from 0.1 to 0.5% and more preferably from 0.2 to 0.35% by weight based on the

The alkaline earth phosphate may be added at any stage of the refining process of the ingredients but preferably it is added before refining.

The addition of the alkaline earth phosphate requires no special processing techniques and therefore allows the use of existing mechanical mix chocolate and compound coating processes.

### EXAMPLES

The present invention will now be further described by way of example only.

### Example 1

To a mixture of chocolate ingredients comprising cocoa liquor, cocoa butter, milk solids and sugar is added 0.288% by weight of tricalcium phosphate based on the total weight of the ingredients. The ingredients are mixed, refined, conched and processed by conventional methods to form a milk chocolate which has a desirable creamy texture similar to that found in expensive traditional crumb processed chocolates.

## Claims

1. Chocolate or a compound coating comprising up to 2% by weight of an alkaline earth phosphate based on the total weight of the product.

2. Chocolate or a compound coating according to claim 1 wherein the amount of the alkaline earth phosphate is from 0.1 to 0.5% by weight based on the total weight of the product.

3. Chocolate or a compound coating according to claim 1 or claim 2 wherein the alkaline earth phosphate is calcium or magnesium.

4. Chocolate or a compound coating according to any of claims 1 to 3 wherein the amount of butterfat contained therein is less then 2% by weight based on the weight of the chocolate or compound coating.

5. Chocolate or a compound coating according to any of claims 1 to 3 which contains no butterfat.

6. A process for the preparation of chocolate or a compound coating containing up to 1% by weight of an alkaline earth phosphate based on the total weight of the product which comprises adding the appropriate amount of the alkaline earth phosphate to the ingredients of the chocolate or compound coating.

7. A process according to claim 6 wherein the alkaline earth phosphate is added before refining the ingredients.
